Europäisches Patentamt

European Patent Office

Office européen des brevets

(19)

(11) Veröffentlichungsnummer: **0 014 347**
**B1**

(12) # EUROPÄISCHE PATENTSCHRIFT

(45) Veröffentlichungstag der Patentschrift:
13.04.83

(51) Int. Cl.³: **D 21 H 5/00**

(21) Anmeldenummer: **80100215.5**

(22) Anmeldetag: **17.01.80**

(54) **Beschichtungsmaterial für die Rückseiten von zu verklebenden Papieren.**

(30) Priorität: **22.01.79 DE 2902293**

(43) Veröffentlichungstag der Anmeldung:
**20.08.80 Patentblatt 80/17**

(45) Bekanntmachung des Hinweises auf die Patenterteilung:
**13.04.83 Patentblatt 83/15**

(84) Benannte Vertragsstaaten:
**AT BE CH DE FR GB IT NL SE**

(56) Entgegenhaltungen:
**DE-A-1 957 329**
**DE-A-2 449 616**
**FR-A-1 539 332**
**GB-A-1 229 812**
**CHEMICAL ABSTRACTS, Band 83, Nr. 6,**
**11. August 1975, Seite 92, Nr. 45037x, Columbus,**
**Ohio, U.S.A.**

(73) Patentinhaber: **Henkel Kommanditgesellschaft auf Aktien, Postfach 1100 Henkelstrasse 67, D-4000 Düsseldorf 1 (DE)**

(72) Erfinder: **Grünberger, Eberhard, Dr., Gustav-Mahler-Strasse 12, D-4010 Hilden (DE)**
Erfinder: **Müller, Roswitha, Am Korresberg 6, D-4006 Erkrath (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 0 014 347

## Beschichtungsmaterial für die Rückseiten von zu verklebenden Papieren

Die vorliegende Erfindung betrifft ein Beschichtungsmaterial zur dehäsiven Ausrüstung von Papier oder Pappe, insbesondere der Rückseiten von Tapeten. Die so ausgerüsteten Tapeten sollen mit einem wäßrigen Kleister vollflächig benetzbar sein, rasch ausquellen und gut verklebt werden können. Trotzdem sollen sie später einmal wieder leicht abgezogen werden können, wenn neu tapeziert werden soll.

Es ist bekannt, Papiere dadurch entsprechend auszurüsten, daß man sie mit wäßrigen Kunststoffdispersionen auf Basis von Copolymerisaten des Styrols mit Acrylsäureestern und/oder Butadien oder dergleichen, auch im Gemisch mit Wachs- oder Paraffinemulsionen beschichtet. Die so vorbehandelten Tapetenrückseiten können mit Kleister, zum Beispiel auf Basis wäßriger Methylcelluloselösung bestrichen werden und lassen sich nach einer bestimmten Quellzeit verkleben. Es ist auch schon bekannt, den zur Beschichtung einzusetzenden Emulsionen zusätzlich Wachse oder auch Pigmente, wie Ton, Kreide oder Talkum zuzufügen. Desgleichen war die Mitverwendung geringer Mengen von wasserlöslichen Materialien, wie Stärke, Dextrin oder dergleichen bekannt.

Diese bekannten Beschichtungsmaterialien weisen jedoch verschiedene Nachteile auf. Die entsprechend ausgerüstete Seite ist bei Erzielung eines guten Trenneffektes bereits so hydrophob, daß sie mit dem wäßrigen Kleister nicht vollflächig benetzt werden kann. Der Kleister zieht sich auf der hydrophoben Schicht zusammen und bildet unregelmäßige Inseln. Diese unerwünschte Erscheinung kann eine vorzeitige Trennung der Klebung verursachen. Außerdem schließen diese Beschichtungsmaterialien die Oberfläche der Papiere so stark ab, daß der wäßrige Kleister sie nur sehr langsam durchdringt. Das notwendige sogenannte Ausquellen des zu verklebenden Papiers oder der Pappe wird dadurch stark verzögert, der Kleister beginnt von den Papierrändern her auszutrocknen. Dieses Austrocknen hat zur Folge, daß zum Beispiel bereits verklebte Tapetenbahnen an den Stoßkanten aufspringen, und die Nähte sich aufstellen. Das dann notwendige Nachkleben muß mit Kunststoffdispersionen beziehungsweise -emulsionen erfolgen und ist aufwendig und insbesondere zeitraubend.

Aufgabe der Erfindung war es, an sich bekannte Beschichtungsmaterialien so zu verändern, daß sie nach Auftrag unter Beihaltung des geforderten Trenneffektes für den wäßrigen Kleister besser benetzbar und rascher durchdringbar werden und eine einwandfreie Verklebung ermöglichen.

Diese Aufgabe wird erfindungsgemäß dadurch gelöst, daß aufzuklebende Papiere oder Pappe, insbesondere Tapeten beschichtet werden mit Dispersionen filmbildender, nichtblockender Thermoplaste sowie von Wachs beziehungsweise Paraffin und gegebenenfalls weiteren üblichen Hilfsstoffen. Die neuen Dispersionen sind dadurch gekennzeichnet, daß sie zusätzlich 1 bis 25 Gewichtsteile natürliche oder synthetisch hergestellte Zeolithe sowie 0,05 bis 0,5 Gewichtsteile eines teilverseiften Pfropfpolymerisats von Acrylnitril auf Stärke, jeweils bezogen auf den Gesamtgehalt an festen Bestandteilen enthalten.

Als Grundlage für die Beschichtungsmaterialien für die Rückseiten von Tapeten dienen thermoplastische Polymerisate, insbesondere Mischpolymerisate von Acrylestern mit Styrol oder auch Mischpolymerisate, die neben den genannten Monomeren noch Vinylchlorid, Vinylester, wie Vinylacetat oder dergleichen enthalten. Die Filmbildungstemperatur geeigneter Polymerisate sollte oberhalb von etwa 25 bis 30° C liegen. Außerdem sollen sie bei üblichen Lagertemperaturen oder kurz darüber noch nicht klebrig werden. Die Beschichtung von Tapeten mit derartigen Polymerisaten ist an sich bekannt. Für den Fachmann in der Technik der Beschichtung von Tapeten ist es einfach, ein geeignetes Polymerisat in Form seiner Dispersion auszuwählen. Besonders geeignet sind Mischpolymerisate von Acrylsäurebutylester, Acrylsäureethylester, Acrylsäuremethylester, Methacrylsäureethylester sowie Styrol. Derartige Polymerisate sind als etwa 40 bis 55 Gewichtsprozent enthaltende Dispersionen im Handel. Sie weisen zweckmäßig einen zwischen etwa 6 und 9 liegenden pH-Wert auf.

Bei den erfindungsgemäß einzusetzenden natürlichen und synthetischen Zeolithen handelt es sich ebenfalls um wohlbekannte Verbindungen. Diese können zum Beispiel als Ionenaustauscher eingesetzt werden. Chemisch gesehen handelt es sich um Silicate, und zwar um wasserhaltige Alkalibeziehungsweise Erdalkali-Alumosilicate. Da die natürlich vorkommenden Zeolithe oftmals uneinheitlich sind, verwendet man zweckmäßig, um gutreproduzierbare Ergebnisse zu erhalten, synthetisch hergestellte Zeolithe.

Zur Herstellung der synthetischen Zeolithe geht man von kieselsäurehaltigen und von tonerdehaltigen Substanzen aus, die zusammen mit Alkalihydroxiden, wie etwa Natriumhydroxid zu den kristallisierten Zeolithen umgesetzt werden. Zur Herstellung der synthetischen Zeolithe kann man beispielsweise Natriumaluminatlösung und Wasserglas zusammengeben. Es können sowohl Kalium- oder auch Natriumwasserglas oder deren Gemische eingesetzt werden. Die gewünschte Zusammensetzung läßt sich ohne weiteres berechnen. Durch Erhitzen und Eindampfen oder auch Abkühlen der Reaktionsmischung kann aus den genannten Komponenten ein geeigneter Zeolith erhalten werden. Einen Überblick über die Herstellung und Anwendung der synthetischen Zeolithe befindet sich in der Zeitschrift »Angewandte Chemie« 87 (1975), S. 659 bis 667.

2

Das teilverseifte Pfropfpolymerisat von Acrylnitril auf Stärke soll nur so weit einer Verseifung unterzogen worden sein, daß noch Amidgruppen vorhanden sind. Zweckmäßig setzt man solche Pfropfpolymerisate ein, bei denen auf 1 Teil Stärke etwa 1 bis 3 Gew.-Teile Acrylnitril aufpolymerisiert wurden. Bei der anschließenden Verseifung sollen alle Nitrilgruppen verseift sein, aber bezogen auf vorher vorhandenes Nitril noch etwa 10 bis 30% Amidgruppen vorhanden sein.

Man hat einerseits schon wasserlösliche Silikate bei der Herstellung von vorbeschichteten, leicht wieder abziehbaren Tapeten verwendet und auch schon zur Verbesserung der Bedruckbarkeit von Papieren Natriumaluminiumsilikate eingesetzt, jedoch nie an einen gemeinsamen Einsatz mit Pfropfpolymerisaten des Acrylnitrils auf Stärke gedacht. Diese neuartige Komposition führt zu einem unerwarteten technischen Effekt, der sowohl in einer guten Wiederablösbarkeit des Tapetenpapiers als auch der hervorragenden Benetzbarkeit des Papiers mit wäßrigem Kleister zu sehen ist.

Außer den vorstehend erwähnten Bestandteilen können den Beschichtungsdispersionen noch weitere hydrophobe Substanzen in geringerer Menge zugesetzt werden. Als solche kommen beispielsweise Dispersionen von niedermolekularem Polyethylen oder Mischpolymerisate des Ethylens mit geringeren Mengen von Comonomeren, wie Propylen oder Vinylacetat infrage. Die Menge dieser Polymerisate sollte aber 25 Gew.-Teile, bezogen auf den Feststoffgehalt des gesamten Beschichtungsmaterials, nicht übersteigen. Selbstverständlich ist es möglich, in untergeordneter Menge weitere hilfsstoffe zuzusetzen, die die Stabilität der Dispersion günstig beeinflussen. Als derartige Substanzen kommen infrage anionenaktive oder nichtionogene oberflächenaktive Verbindungen oder auch bestimmte Thixotropierungsmittel, wie Bentonite, kolloidale Kieselsäure oder dergleichen mehr. Diese Hilfsstoffe können in einer Menge von 0,1 bis 5 Gewichtsprozent, bezogen auf den Gesamtfeststoffgehalt, vorliegen.

Die wäßrigen Beschichtungsmaterialien werden mittels Luftbürste, Sizepresse oder Rakel auf das Trägerpapier, das heißt, die Tapete aufgetragen. Die Menge an aufgetragenem Feststoff soll zwischen 2 und 20 g/m², vorzugsweise zwischen 4 und 16 g/m² liegen. Nach dem Auftrag werden die Papiere in üblicher Weise getrocknet.

Für die Verwendbarkeit der Tapeten ist eine vollflächige Benetzbarkeit der aufgetragenen Schicht mit dem wäßrigen Kleister wesentlich. Dadurch wird eine gleichmäßige Verklebung erreicht werden. Qualitativ läßt sich die gleichmäßige Benetzbarkeit durch Aufrakeln eines angefärbten Kleisters visuell beurteilen.

Weiterhin ist eine gute Kleisterpenetration durch die aufgetragene Schicht erwünscht, ebenso wie ein rasches Anquellen des Trägers für das Verarbeiten der Tapeten von Bedeutung ist. Tapetenbahnen lassen sich nämlich nur dann glatt aufbringen, wenn beim Austrocknen durch Schrumpfen ursprünglich vorhandene Blasen eleminiert werden. Kleisterpenetration und Papierquellung sollen rasch ablaufen, damit der aufgetragene Kleister von den Rändern her nicht austrocknet und an den Stoßnähten der verklebten Bahnen das unerwünschte Aufspringen eintritt und sich die Kanten aufstellen. Die Penetration kann über die Wasseraufnahme nach Cobb (DIN 53 132) bestimmt werden. Die Ausquellzeit wird empirisch durch Klebeversuche ermittelt. Durch den Zusatz entsprechend dosierter Mengen an Zeolith können bei gegebenen Dispersionen die gewünschten Werte eingestellt werden.

## Beispiel 1

Ein Beschichtungsmaterial aus folgenden Bestandteilen wurde durch Mischen unter langsamem Rühren hergestellt:

35 Gewichtsteile einer 45gewichtsprozentigen Dispersion eines Copolymerisats aus Styrol/Acrylsäurebutylester (Handelsprodukt mit einer Viskosität von 180 mPa · s nach Epprecht, Teilchengröße von etwa 0,2 μm, Filmbildungstemperatur von 45° C),

17 Gewichtsteile einer 50gewichtsprozentigen Paraffindispersion (42° C),

2 Gewichtsteile Kieselsäure (kolloidal verteilbar),

26 Gewichtsteile Wasser, entmineralisiert,

4 Gewichtsteile Zeolith (handelsübliches Natriumaluminiumsilikat einer Teilchengröße zwischen 3 und 5 μm).

Diese Zusammensetzung wies eine Viskosität von 240 mPa · s auf. Mit ihr wurde Papier eines Gewichts von 80 g/m² so beschichtet, daß ein Auftrag von 8 g/m² Trockensubstanz erfolgte. Die so ausgerüstete Seite des Papiers hatte einen $Cobb_{180}$-Wert von 14 g/m².

3

**0 014 347**

Dieses so vorbereitete Papier wurde mit einer 2%igen Lösung von Methylcellulose (9000 mPa · s nach Brookfield bei 20°C, 20 Upm) bestrichen. Es erfolgte eine vollständige Benetzung, der Auftrag betrug 3,5 g/cm² an Methylcellulose. Nach einer Quellzeit von 4 Minuten konnte die Verklebung auf Gipskartonplatten in der üblichen Weise erfolgen. Nach dem Auftragen der Tapete auf die Kartonplatte und dem Antrocknen war eine gleichmäßige Tapezierung bewirkt. Die Tapete ließ sich trocknen von der Kartonplatte abziehen. Die Abzugskraft betrug im Mittel, aus 5 Proben gemessen, 210 g/m².

## Beispiel 2

Es wurde eine Beschichtungsdispersion hergestellt durch langsames Zusammenrühren von:

| | |
|---|---|
| 35 Gewichtsteile | einer 45gewichtsprozentigen Dispersion eines Mischpolymerisats aus Styrol und Acrylsäurebutylester (Teilchengröße 0,2 bis 0,3 μm, Filmbildungstemperatur 42°C, Viskosität nach Epprecht 250 mPa · s), |
| 17 Gewichtsteile | einer 50gewichtsprozentigen Paraffindispersion (F 44 bis 45°C), |
| 2 Gewichtsteile | Kieselsäure (kolloidal löslich), |
| 26 Gewichtsteile | Wasser, entmineralisiert, |
| 4 Gewichtsteile | Zeolith (Natriumaluminiumsilikat einer durchschnittlichen Korngröße von circa 10 μm), |
| 0,08 Gewichtsteile | teilverseiftes Pfropfpolymerisat von Acrylnitril auf Stärke (auf 1 Gewichtsteil Stärke waren 1,5 Gewichtsteile Acrylnitril aufgepfropft; die Verseifung hatte zu Amid- und Carboxylgruppen im Verhältnis 1 : 3 geführt). |

Die Dispersion hatte eine Viskosität von 800 mPa · s.

Mit dieser Emulsion wurden Tapetenpapiere gemäß Beispiel 1 von 80 g/m² beschichtet, so daß ein Auftrag von 8 g/m² erfolgte. Der $Cobb_{180}$-Wert nach dem Trocknen betrug 15,1 g/m².

Die so vorbereitete Tapetenrückseite wurde mit einer 2%igen wäßrigen Lösung eines Tapetenkleisters (Basis Methylcellulose 9000 mPa · s nach Brookfield bei 20°C, 20 Upm) beschichtet. Dabei trat vollständige Benetzung ein. Nach dem Trocknen wurde ein Auftrag von 3,5 g/m² festgestellt.

Nach einer Quellzeit von 3 Minuten war vollständige Benetzung eingetreten, und die Verklebung mit einer Gipskartonplatte erfolgte. Nach dem Auftrocknen der Tapete auf der Unterlage ließ sich die Tapete trocken wieder abziehen. Die Anzugskraft betrug im Mittel aus 5 Proben 220 g/m².

## Vergleichsversuch

Es wurde eine Zusammensetzung gemäß Beispiel 1 hergestellt, jedoch kein Zeolith zugesetzt. Die Viskosität dieser Mischung betrug 200 mPa · s.

Mit ihr wurden Tapetenpapiere von 80 g/m² beschichtet (8 g/m²). Der $Cobb_{180}$-Wert betrug dann 6,1 g/m².

Die Rückseite der Tapete wurde dann mit einer 2%igen wäßrigen Lösung von Methylcellulose benetzt. Der Auftrag betrug 3,5 g/m² Trockensubstanz, jedoch konnte visuell festgestellt werden, daß die Benetzung nicht vollflächig war. Nach einer Quellzeit von 16 Minuten wurde auf Gipskartonplatten verklebt.

Die Haftung der Tapete auf dem Untergrund war ungleichmäßig. Die Abzugskraft betrug im Mittel aus 5 Proben 181 g/m². An einigen Rändern löste sich die Tapete bereits nach 1 bis 2 Stunden von der Gipskartonplatte.

## Patentanspruch

Beschichtungsmaterialien für die Rückseiten von zu verklebenden Papieren, insbesondere von Tapeten, bestehend aus feinteiligen Dispersionen filmbildender, nichtblockender Thermoplasten sowie Wachs beziehungsweise Paraffin und gegebenenfalls weiteren üblichen Hilfsstoffen, dadurch gekennzeichnet, daß sie zusätzlich 1 bis 25 Gewichtsteile natürliche oder synthetisch hergestellte Zeolithe sowie 0,05 bis 0,5 Gewichtsteile eines teilverseiften Pfropfpolymerisats von Acrylnitril auf Stärke, jeweils bezogen auf den Gesamtgehalt an festen Bestandteilen enthalten.

4

## Claim

Coating materials for the backs of papers to be pasted, particularly wallpaper, consisting of fine dispersions of film-forming non-blocking thermoplasts and wax or paraffin and, optionally, other standard auxiliaries, characterised in that they additionally contain from 1 to 25 parts by weight of natural or synthetic zeolites and 0.05 to 0.5 parts by weight of a partially hydrolysed graft polymer of acrylonitrile on starch, based in each case on the total content of solid constituents.

## Revendication

Matériaux de revêtement pour le verso de papiers à coller, en particulier de papiers peints, consistant en des dispersions finement divisées de thermoplastes non bloquants filmogènes de même que de cire ou de paraffine et éventuellement d'autres auxiliaires usuels, caractérisés en ce qu'ils contiennent supplémentairement 1 à 25 parties en poids de zéolites naturelles ou fabriquées synthétiquement de même que 0,05 à 0,5 partie en poids d'un polymère greffé partiellement saponifié d'acrylonitrile sur amidon, en se rapportant chaque fois à la teneur totale en constituants solides.